# EUROPÄISCHE PATENTSCHRIFT

(11) **EP 2 428 696 B1**
(45) Veröffentlichungstag und Bekanntmachung des Hinweises auf die Patenterteilung: **01.04.2015**
(21) Anmeldenummer: 11007724.5
(22) Anmeldetag: 03.04.2009
(51) Int. Cl.: F16F 1/02, A47C 27/06, A47C 23/00

(54) **Federelement**
Spring element
Elément de ressort

(30) Priorität: 03.04.2008 DE 202008004616 U
(43) Veröffentlichungstag der Anmeldung: 14.03.2012
(62) Teilanmeldung aus: 09004972.7
(73) Patentinhaber: Diemer & Dr. Jaspert GbR, 85630 Grasbrunn (DE)
(72) Erfinder: Jaspert, Bodo F., 85630 Grasbrunn (DE); Diemer, Gregor, 85456 Wartenberg (DE)
(74) Vertreter: Manitz, Finsterwald & Partner GbR

(56) Entgegenhaltungen:
- DE-U1-202007 000 158

## Beschreibung

Die vorliegende Erfindung betrifft ein Federelement als Kern einer Federkernmatratze oder als Stützelement einer Untermatratze zur Abstützung einer Obermatratze mit einer unteren Stützfläche, einer oberen Stützfläche und einem die untere Stützfläche mit der oberen Stützfläche verbindenden Federkörper, welcher zwei Federarme aufweist, die von der unteren Stützfläche weggeführt sind, insbesondere ohne sich in Federrichtung betrachtet zu überlappen, wobei, jeweils in Federrichtung betrachtet, die zwei Federarme mit je einem ersten Abschnitt von einer ersten Seite der unteren Stützfläche derart seitlich an der unteren Stützfläche vorbei in Richtung auf die von der ersten Seite der unteren Stützfläche abgewandte Seite der unteren Stützfläche geführt sind, dass sie sich nicht mit der unteren Stützfläche überlappen und beidseits um die untere Stützfläche herumgeführt sind.

Ein derartiges Federelement ist aus der DE 20 2007 000 158 U bekannt.

Der Erfindung liegt die Aufgabe zugrunde, ein derartiges Federelement weiterzubilden.

Diese Aufgabe wird dadurch gelöst, dass die zwei Federarme mit ihrem jeweiligen ersten Abschnitt von derselben Seite der unteren Stützfläche weggeführt sind.

Durch diese Ausgestaltung ergibt sich ein sehr kompaktes Federelement, welches sehr gute Federeigenschaften aufweist, insbesondere ein senkrechtes Einfedern ohne seitliche Verschiebung gewährleistet.

Nach einer besonderen Ausgestaltung dieses Federelementes ist vorgesehen, dass sich an den ersten Abschnitt der beiden Federarme jeweils ein zweiter Abschnitt anschließt, der zurück in Richtung auf die erste Seite der unteren Stützfläche und derart seitlich an dieser vorbeigeführt ist, dass sich der zweite Abschnitt in Federrichtung betrachtet weder mit der unteren Stützfläche noch mit dem jeweiligen ersten Abschnitt überlappt.

Durch diesen zweiten Abschnitt wird die Symmetrie des Federelementes weiter erhöht. Außerdem kann dadurch eine größere Federhöhe realisiert werden, ohne auf die Kompaktheit und einfache Entformbarkeit des Federelementes zu verzichten. Dabei kann an das obere Ende des zweiten Abschnittes eine Deckplatte angeformt oder anbringbar sein. Diese Deckplatte bildet die genannte obere Stützfläche. Sie verläuft insbesondere seitlich außerhalb des Federkörpers und überdeckt sich dadurch in Federrichtung betrachtet nicht mit dem Federkörper und der unteren Stützfläche.

Das Federelement besteht bevorzugt aus Kunststoff und ist insbesondere einstückig gefertigt. Um eine einfache Entformung des Federelements zu ermöglichen, ist dieses so ausgebildet, dass sich die Teile des Federelements in Federrichtung betrachtet nicht gegenseitig überdecken.

Ausführungsbeispiele der Erfindung sind in der Zeichnung dargestellt und werden nachfolgend beschrieben. Es zeigen, jeweils in schematischer Darstellung,
- Fig. 1: eine perspektivische Ansicht eines nicht erfindungsgemäßen Federelements,
- Fig. 2: eine Draufsicht auf die Oberseite des Federelements von Fig. 1,
- Fig. 3: eine Seitenansicht des Federelements von Fig. 1,
- Fig. 4: eine um 90° gedrehte Seitenansicht des Federelements von Fig. 1,
- Fig. 5: eine perspektivische Ansicht eines weiteren nicht erfindungsgemäßen Federelements,
- Fig. 6: eine Draufsicht auf die Oberseite des Federelements von Fig. 5,
- Fig. 7: eine Seitenansicht des Federelements von Fig. 5,
- Fig. 8: eine um 90° gedrehte Seitenansicht des Federelement von Fig. 5,
- Fig. 9: eine perspektivische Ansicht noch eines nicht erfindungsgemäßen Federelements,
- Fig. 10: eine Draufsicht auf die Oberseite des Federelements von Fig. 9,
- Fig. 11: eine Seitenansicht des Federelements von Fig. 9,
- Fig. 12: eine um 90° gedrehte Seitenansicht des Federelements von Fig. 9,
- Fig. 13: eine perspektivische Ansicht eines erfindungsgemäßen Federelementes,
- Fig. 14: eine Draufsicht auf die Oberseite des Federelementes von Fig. 13,
- Fig. 15: eine Seitenansicht des Federelementes von Fig. 13, und
- Fig. 16: eine um 90° gedrehte Seitenansicht des Federelementes von Fig. 13.

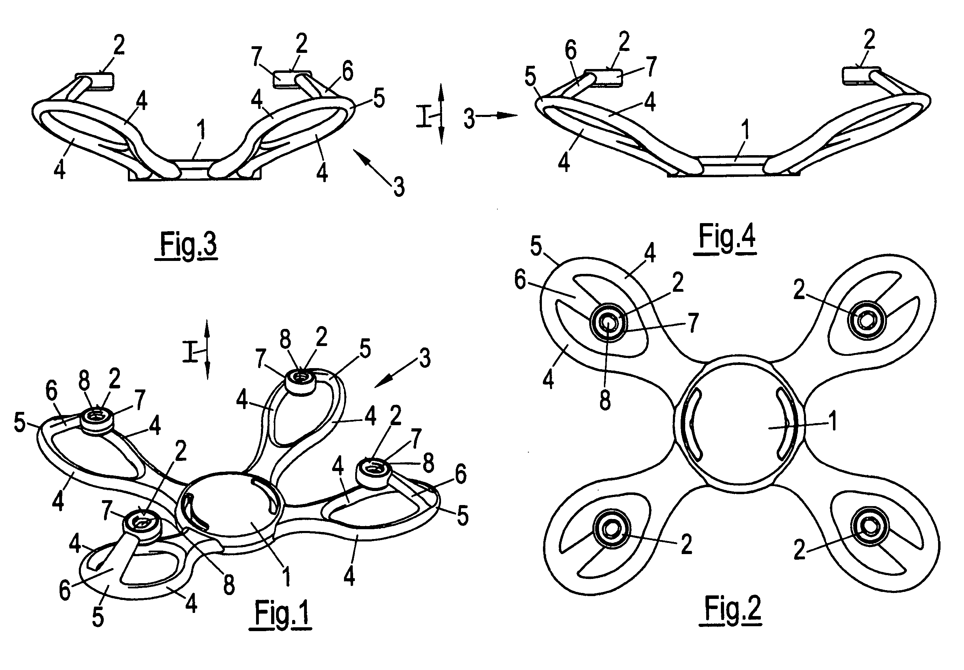

Das in den Fig. 1 bis 4 dargestellte Federelement umfasst eine untere Stützfläche 1, eine obere Stützfläche 2 und einen die untere Stützfläche 1 mit der oberen Stützfläche 2 verbindenden Federkörper 3. Der Federkörper 3 umfasst mehrere Federarme 4, die von der unteren Stützfläche 1 nach außen weg und anschließend wieder zurück nach innen geführt sind, ohne sich in Federrichtung I betrachtet zu überlappen, wobei jeweils zwei Federarme 4 an ihrem radial inneren Ende aneinander angeformt sind. An ihrem radial außen liegenden Ende 5 sind jeweils zwei Federarme 4 miteinander verbunden und von dort verbunden zurück nach radial innen geführt. Bis zu ihrer Verbindungsstelle 5 bilden die beiden verbundenen Federarme 4 zusammen einen Bogen. Neben der dargestellten ovalen Form kann auch eine Kreisform vorgesehen sein. Auch eine eckige oder jede andere Form ist grundsätzlich möglich.

Die beiden Federarme 4 sind an ihren gemeinsamen, nach radial innen zurückgeführten Abschnitten 6 aneinander angeformt bzw. einstückig miteinander ausgebildet. Das radial innere Ende der gemeinsamen Abschnitte 6 der jeweils paarweise verbundenen Federarme 4 geht im dargestellten Ausführungsbeispiel in ein ringförmiges Element 7 über. Die Öffnung 8 des Rings kann als Aufnahme für ein Verbindungselement einer hier nicht dargestellten Deckplatte dienen. Die Elemente 7 können aber auch selbst als Auflagefläche dienen. Gemeinsam bilden alle Elemente 7 jedenfalls die obere Stützfläche 2.

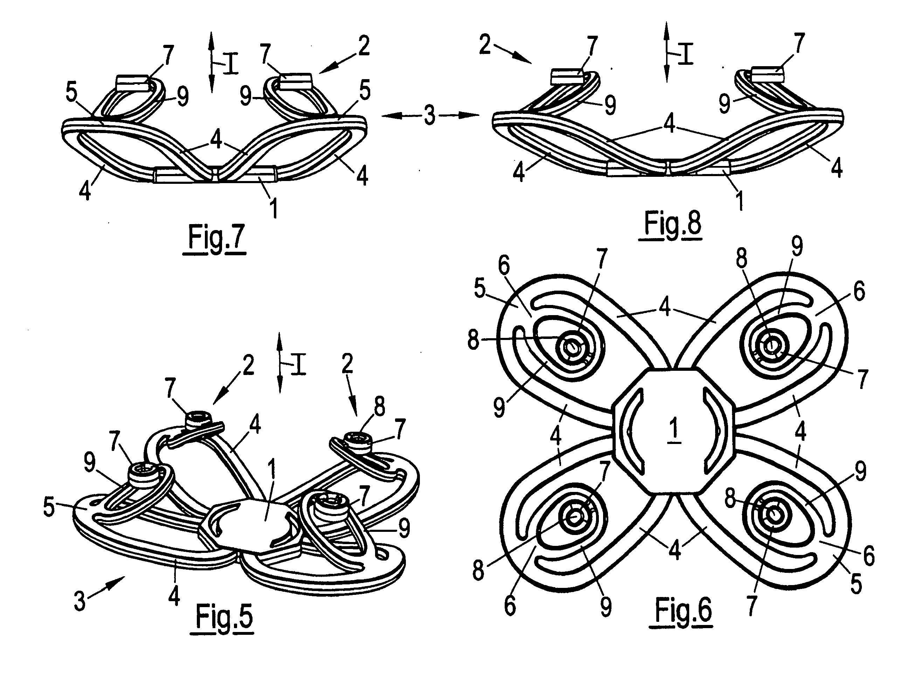

Das in den Fig. 5 bis 8 dargestellte Federelement umfasst ebenfalls eine untere Stützfläche 1, eine obere Stützfläche 2 und einen die untere Stützfläche 1 mit der oberen Stützfläche 2 verbindenden Federkörper 3. Der Federkörper 3 umfasst wiederum mehrere Federarme 4, die von der unteren Stützfläche 1 nach außen weg und dann anschließend wieder zurück nach innen geführt sind, ohne sich in Federrichtung I betrachtet zu überlappen. Außerdem sind auch hier jeweils zwei Federarme 4 an ihrem radial außen liegenden Ende 5 miteinander verbunden und von dort zurück nach radial innen geführt. Die zurückgeführten Abschnitte der Federarme 4 sind jedoch nicht miteinander verbunden sondern bilden ebenfalls einen Bogen 9. Der Bogen kann auch hier neben der dargestellten ovalen Form eine Kreisform, eine eckige oder jede andere Form aufweisen.

Auch bei dem in den Fig. 5 bis 8 dargestellten Federelement weisen die radial inneren Enden der rückgeführten Abschnitte 6, nämlich der Bögen 9, ein ringförmiges Element 7 auf, welches sich hier jedoch in Federrichtung I betrachtet innerhalb des Bogens 9 befindet und an dessen radial inneres Ende angeformt ist. Jedes ringförmige Element weist wiederum eine Öffnung 8 auf, die als Verbindungselement für eine Deckplatte dienen kann. Auch hier können die Elemente 7 selbst als Auflagefläche dienen oder als Teil einer Deckplatte ausgebildet sein.

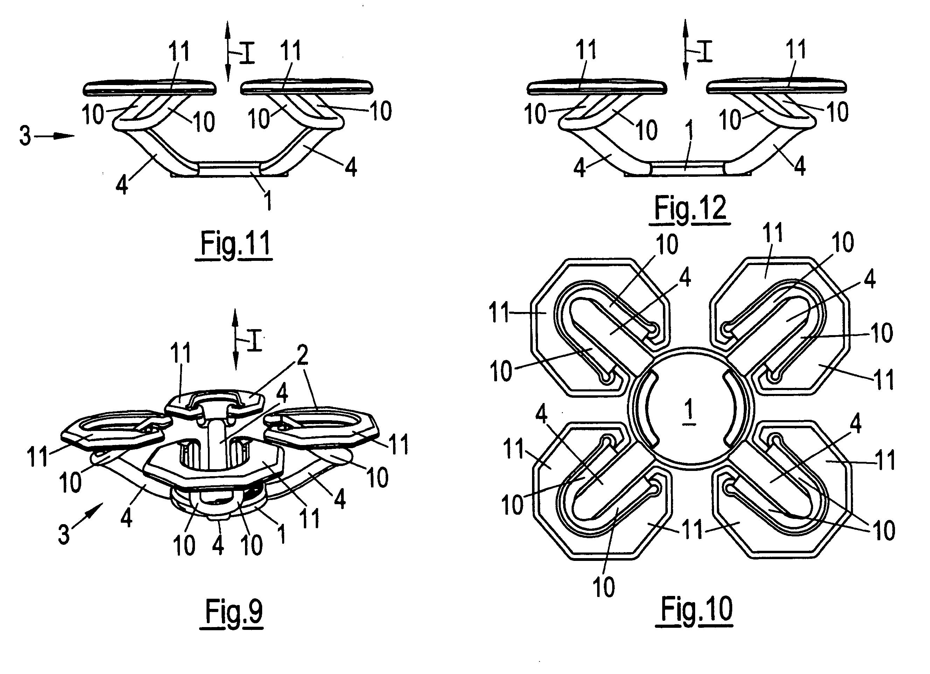

Das in den Fig. 9 bis 12 dargestellte Federelement umfasst wiederum eine untere Stützfläche 1, eine obere Stützfläche 2 und einen die untere Stützfläche 1 mit der oberen Stützfläche 2 verbindenden Federkörper 3. Der Federkörper 3 umfasst vier Federarme 4, die von der unteren Stützfläche 1 nach radial außen weg und anschließend wieder zurück nach innen geführt sind, ohne sich in Federrichtung I betrachtet zu überlappen.

An den radial außen liegenden Enden der Federarme 4 sind jeweils zwei nach radial innen zurückgeführte Abschnitte 10 angeformt, die sich beidseits des Federarmes 4 befinden. Die rückgeführten Abschnitte 10 sind dann an ihrem radial innen liegenden Ende erneut nach radial außen geführt und am radial äußeren Ende des nach außen geführten Abschnitts miteinander verbunden. Dadurch wird eine parallel zur unteren Stützfläche 1 verlaufende obere Stützfläche 2 gebildet. Insbesondere bilden die nach radial außen geführten Abschnitte 11 jeweils einen Teil einer Deckplatte. Die Abschnitte 11 können aber auch zur Verbindung mit einer Deckplatte ausgebildet sein.

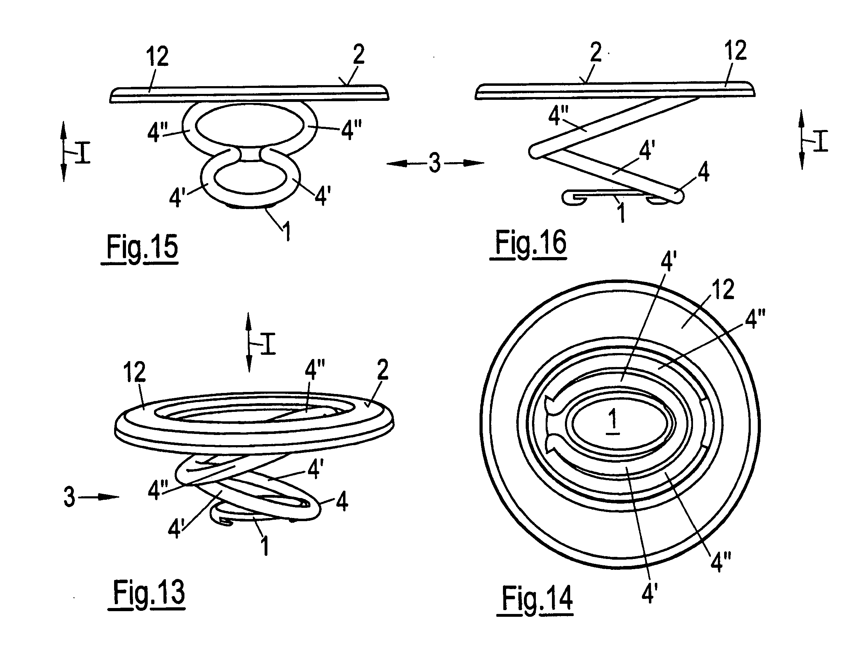

Auch das in den Fig. 13 bis 16 dargestellte Federelement umfasst eine untere Stützfläche 1, eine obere Stützfläche 2 und einen die untere Stützfläche 1 mit der oberen Stützfläche 2 verbindenden Federkörper 3. Der Federkörper 3 umfasst zwei Federarme 4, die mit je einem ersten Abschnitt 4' von einer ersten Seite der unteren Stützfläche 1 derart seitlich an der unteren Stützfläche 1 in Richtung auf die von der ersten Seite abgewandte Seite der unteren Stützfläche 1 geführt sind, dass sie sich in Federrichtung I betrachtet nicht mit der unteren Stützfläche 1 überlappen und beidseits um die untere Stützfläche 1 herumgeführt sind. Die beiden ersten Abschnitte 4' der Federarme 4 sind an ihrem zweiten Ende miteinander verbunden und bilden zusammen einen Ring, der die untere Stützfläche in Federrichtung I betrachtet umschließt und auf der ersten Seite der unteren Stützfläche 1 an diese angeformt ist.

Die Federarme 4 weisen jeweils einen zweiten Abschnitt 4" auf, der an den ersten Abschnitt 4' anschließt. Dieser zweite Abschnitt 4" ist ausgehend von der Verbindung mit dem ersten Abschnitt 4' wieder zurück in Richtung auf die erste Seite der unteren Stützfläche 1 geführt. Dort sind die beiden zweiten Abschnitte 4" wieder miteinander verbunden, so dass auch diese zusammen einen Ring bilden. Dieser Ring umschließt sowohl den von den ersten Abschnitten 4' gebildeten Ring als auch die untere Stützfläche 1. Dadurch überlappen sich weder die zweiten Abschnitte 4" mit den ersten Abschnitten 4' noch mit der unteren Stützfläche 1.

An die oberen, miteinander verbundenen Enden der zweiten Abschnitte 4" ist schließlich eine Deckplatte 12 angeformt, die die obere Stützfläche 2 bildet. Die Deckplatte 12 ist ebenfalls ringförmig ausgebildet und weist einen solchen Innendurchmesser auf, dass sie sich in Federrichtung I betrachtet seitlich außerhalb der zweiten Abschnitte 4" der Federarme 4 befindet, also sich in Federrichtung I betrachtet weder mit diesen noch den ersten Abschnitten 4' noch mit der unteren Stützfläche 1 überlappt. Dies ist insbesondere in Fig. 16 erkennbar.

Grundsätzlich kann an den zweiten Abschnitt 4" der Federarme 4 jeweils noch ein dritter Abschnitt und weitere Abschnitte anschließen, die entsprechend den ersten und zweiten Abschnitten ausgebildet sind. Dadurch werden weitere ringförmige Federarmabschnitte gebildet und die Federhöhe weiter vergrößert. Die Federabschnitte können auch so ausgebildet sein, dass sie keine Ringe bilden, also nicht an ihren oberen Enden miteinander verbunden sind. Das heißt, sie können frei enden oder jeweils unabhängig voneinander mit der Deckplatte 12 verbunden sein. Auch kann sich der zweite Abschnitt 4" in Federrichtung I betrachtet grundsätzlich auch innerhalb des ersten Abschnitts 4' befinden. Dasselbe gilt für einen eventuellen dritten und jeden weiteren Abschnitt der Federarme 4.

### Bezugszeichenliste

- 1: untere Stützfläche
- 2: obere Stützfläche
- 3: Federkörper
- 4: Federarm
- 4': erster Abschnitt von 4
- 4": zweiter Abschnitt von 4
- 5: Umkehrpunkt
- 6: Abschnitt
- 7: Ringelement
- 8: Öffnung
- 9: Bogen
- 10: Abschnitt
- 11: Abschnitt
- 12: Deckplatte
- I: Federrichtung

## Patentansprüche

1. Federelement, insbesondere als Kern einer Federkernmatratze oder als Stützelement einer Untermatratze zur Abstützung einer Obermatratze, mit einer unteren Stützfläche (1), einer oberen Stützfläche (2) und einem die untere Stützfläche (1) mit der oberen Stützfläche (2) verbindenden Federkörper (3), welcher zwei Federarme (4) aufweist, die von der unteren Stützfläche (1) weggeführt sind, insbesondere ohne sich in Federrichtung (I) betrachtet zu überlappen, wobei, jeweils in Federrichtung (I) betrachtet, die zwei Federarme (4) mit je einem ersten Abschnitt (4') von einer ersten Seite der unteren Stützfläche (1) derart seitlich an der unteren Stützfläche (1) vorbei in Richtung auf die von der ersten Seite der unteren Stützfläche (1) abgewandte Seite der unteren Stützfläche (1) geführt sind, dass sie sich nicht mit der unteren Stützfläche (1) überlappen und beidseits um die untere Stützfläche (1) herumgeführt sind,
dadurch **gekennzeichnet**, dass
die zwei Federarme (4) mit ihrem jeweiligen ersten Abschnitt (4') von derselben Seite der unteren Stützfläche (1) weggeführt sind.

2. Federelement nach Anspruch 1,
dadurch **gekennzeichnet**, dass
sich an den ersten Abschnitt (4') der beiden Federarme (4) jeweils ein zweiter Abschnitt (4") anschließt, der zurück in Richtung auf die erste Seite der unteren Stützfläche (1) und derart seitlich an dieser vorbeigeführt ist, dass sich der zweite Abschnitt (4") in Federrichtung (I) betrachtet weder mit der unteren Stützfläche (1) noch mit dem jeweiligen ersten Abschnitt (4') überlappt.

3. Federelement nach einem der vorhergehenden Ansprüche,
dadurch **gekennzeichnet**, dass
das Federelement aus Kunststoff besteht, wobei das Federelement bevorzugt einstückig ausgebildet ist, insbesondere ohne Abschnitte, die sich in Federrichtung (I) betrachtet gegenseitig überlappen.

## Claims

1. A spring element, in particular as a core of an innerspring mattress or as a support element of an undermattress for supporting an overmattress, having a lower support surface (1), an upper support surface (2) and a spring body (3) which connects the lower support surface (1) to the upper support surface (2) and which has two spring arms (4) which are led away from the lower support surface (1), in particular without overlapping, viewed in the spring direction (I), wherein, viewed in the spring direction (I) respective first sections (4') of the two spring arms (4) are led from a first side of the lower support surface (1) laterally past the lower support surface (1) in the direction of the side of the lower support surface (1) remote from the first side of the lower support surface (1) such that they do not overlap with the lower support surface (1) and are guided around the lower support surface (1) at both sides,
**characterized in that**
the respective first sections (4') of the two spring arms (4) are led away from the same side of the lower support surface (1).

2. A spring element in accordance with claim 1,
**characterised in that**
a respective second section (4") adjoins the first section (4') of the two spring arms (4), said second section being led back in the direction of the first side of the lower support surface (1) and laterally past it such that the second section (4") does not overlap with either the lower support surface (1) or with the respective first section (4') viewed in the spring direction (I).

3. A spring element in accordance with one of the preceding claims,
**characterised in that**
the spring element is composed of plastic, with the spring element preferably being in one piece, in particular without sections which mutually overlap, viewed in the spring direction (I) .

## Revendications

1. Élément de ressort, en particulier à titre de noyau d'un matelas à ressort ou à titre d'élément de soutien d'un sommier pour soutenir un matelas, comprenant une surface de soutien inférieure (1), une surface de soutien supérieure (2) et un corps de ressort (3) qui relie la surface de soutien inférieure (1) à la surface de soutien supérieure (2) et qui comprend deux bras de ressort (4) qui sont menés vers l'extérieur en éloignement de la surface de soutien inférieure (1), en particulier sans se chevaucher lorsqu'on les observe dans la direction (I) du ressort, dans lequel, lorsqu'on les observe respectivement dans la direction (I) du ressort, les deux bras de ressort (4) sont guidés chacun avec un premier tronçon (4') depuis un premier côté de la surface de soutien inférieure (1), latéralement en contournant la surface de soutien inférieure (1) et en direction du côté de la surface de soutien inférieure (1) détourné du premier côté de la surface de soutien inférieure (1) de telle façon qu'ils ne chevauchent pas la surface de soutien inférieure (1) et sont guidés des deux côtés tout autour de la surface de soutien inférieure (1),
**caractérisé en ce que** les deux bras de ressort (4) sont menés vers l'extérieur avec leurs premiers tronçons respectifs (4') depuis le même côté de la surface de soutien inférieure (1).

2. Élément de ressort selon la revendication 1,
**caractérisé en ce qu'**un second tronçon respectif (4") se raccorde au premier tronçon (4') des deux bras de ressort (4), ledit second tronçon étant mené en retour en direction du premier côté de la surface de soutien inférieure (1) et guidé latéralement en contournant celle-ci de telle façon que le second tronçon (4"), lorsqu'on l'observe dans la direction (I) du ressort, ne se chevauche ni avec la surface de soutien inférieure (1) ni avec le premier tronçon respectif (4').

3. Élément de ressort selon l'une des revendications précédentes,
**caractérisé en ce que** l'élément de ressort est en matière plastique, et l'élément de ressort est réalisé de préférence d'une seule pièce, en particulier sans tronçons qui se chevauchent réciproquement lorsqu'on les observe dans la direction (I) du ressort.
